Europäisches Patentamt

European Patent Office

Office européen des brevets

(11) Publication number: **0 278 664**
**A2**

## (12) EUROPEAN PATENT APPLICATION

(21) Application number: **88300883.1**

(51) Int. Cl.⁴: **H04N 5/64**

(22) Date of filing: **02.02.88**

(30) Priority: **06.02.87 GB 8702743**

(43) Date of publication of application:
**17.08.88 Bulletin 88/33**

(84) Designated Contracting States:
**AT BE CH DE ES FR GR IT LI LU NL SE**

(71) Applicant: **Lynham, Thomas Firth**
**Bramble Place Chapel Maidstone Road**
**Horsmonden Kent, TN12 8HH(GB)**

Applicant: **Curtis, Lee James**
**Bramble Place Chapel Maidstone Road**
**Horsmonden Kent, TN12 8HH(GB)**

(72) Inventor: **Lynham, Thomas Firth**
**Bramble Place Chapel Maidstone Road**
**Horsmonden Kent, TN12 8HH(GB)**
Inventor: **Curtis, Lee James**
**Bramble Place Chapel Maidstone Road**
**Horsmonden Kent, TN12 8HH(GB)**

(74) Representative: **Jones, Graham H.**
**Graham Jones & Company 77 Beaconsfield**
**Road Blackheath**
**London SE3 7LG(GB)**

(54) **A panel for a television.**

(57) A panel (2) which is for fitting to a screen (12) of
a television (10) and which comprises a pattern of
areas (4) through which the screen (12) is visible, the
panel (2) being such that when it is in position on the
screen (12) and the television (10) is on then the
areas (4) enable a light display to be seen on the
panel (2).

*FIG.2.*

EP 0 278 664 A2

## A PANEL FOR A TELEVISION

This invention relates to a panel for a television. More especially, this invention relates to a panel which is for fitting to a screen of a television.

It is an aim of the present invention to provide a means by which a television can be used to provide another area of enjoyment, which area of enjoyment has not heretofor been available.

Accordingly, this invention provides a panel which is for fitting to a screen of a television and which comprises a pattern of areas through which the screen is visible, the panel being such that when it is in position on the screen and the television is on then the areas enable a light display to be seen on the panel.

The pattern of areas may be such that the light display forms a word, picture or an abstract display. The light display may be seen as a changing light display due to a changing television picture on the television. The individual areas in the pattern will be too small to see a picture on the screen of the television, since the aim of the panel is to obscure the television picture whilst retaining movement of light and colour which is viewable on the panel.

The areas may be circular, star, triangular, square, rectangular, slot-shaped, crescent-shaped or wavy-shaped areas. Generally, the areas can be of any suitable and appropriate shape.

In the first embodiment of the invention, the panel may be one in which the areas are apertures, and in which the panel is made of an opaque material. Thus, for example, the panel may be made from paper or card although it may also be made of a plastics material if desired.

In a second embodiment of the invention, the panel may be one which is made of an opaque plastics material, and in which the areas are areas of the opaque plastics material that are sufficiently thin so as to enable the light display to be seen on the panel.

In the third embodiment of the invention and as an alternative to making the panel of an opaque material with areas in the form of apertures, the panel may be made of a transparent material which is rendered opaque, for example by printing, and in this case the areas are the transparent areas that have not been rendered opaque. Such a panel could be made of a plastics material and it could easily be printed, for example by silk screening, to produce a pattern of transparent areas through which the television screen could be seen.

The panel may include fastener means for fastening the panel to the screen of the television.

The fastener means may comprise folded portions of the panel for fitting around the television.

The fastener means may alternatively comprise suction pads or sticky tape.

Further, the fastener means may comprise a book or folder, the panel forming one of the pages of the book or folder, and the book or folder being for resting on top of the television with the panel resting downwardly over the screen of the television.

The fastener means may still further comprise a weighted member, the weighted member being for resting on top of the television such that the panel is able to rest downwardly over the screen of the television.

The panel may be a flat panel.

Alternatively, the panel may be one in which the panel is provided with protuberances, and in which the areas are provided in the protuberances.

The areas may be formed in the apex of the protuberances. With a panel made of an opaque plastics material, as the protuberances are formed, the plastics material may be arranged to get thinner towards the apex of the protuberances and sufficiently thin to enable light from the screen of the television to be seen as the light display.

The protuberances may be of any desired shape such for example as dome or pyramid shape. As an alternative to employing protuberances, the areas may be formed in recessed portions. Where the panel is not flat, it may advantageously be vacuumed formed from a plastics material.

The panel of the invention may be used for giving a variety of beneficial effects. For example, the panel may be such that the light display forms an abstract display which is watched for the purpose of relaxing a person. Such a panel may be especially good for people suffering from insomnia, high blood pressure and nerves. Alternatively, the light display may form a word or words such for example as advertising material or greetings, for example happy birthday or happy Christmas. Especially, where the light display forms a greeting, then the panel may be in the form of a card such as a birthday card, Christmas car, Easter card or valentines day card.

The present invention also provides a television when provided with a panel.

Embodiments of the invention will now be described solely by way of example and with reference to the accompanying drawings in which:

Figure 1 shows a first panel of the invention;

Figure 2 shows a second panel and how it fits to a television;

Figures 3 and 4 show a third panel and how it fits to a television;

Figures 5 and 6 show fourth and fifth panels;

Figures 7, 8 and 9 shows a sixth panel;

Figures 10,11 and 12 show a seventh panel;

Figure 13 shows various patterns for the areas on the panel;

Figure 14 illustrates the use of different types of areas in a single panel and further illustrates the use of an advertising word;

Figure 15 shows how a birthday greeting card can be formed;

Figures 16 and 17 show two different types of patterns of areas that may be employed for viewing to be complementary with music;

Figure 18 shows a panel in the form of a book and illustrates how the panel can be used in astronomy;

Figure 19 shows how the book forms fastener means for securing the book above a television;

Figure 20 is like the embodiment shown in Figure 19 except that Figure 20 is in the form of a folder rather than a book; and

Figures 21 and 22 show two further different light displays which form pictures.

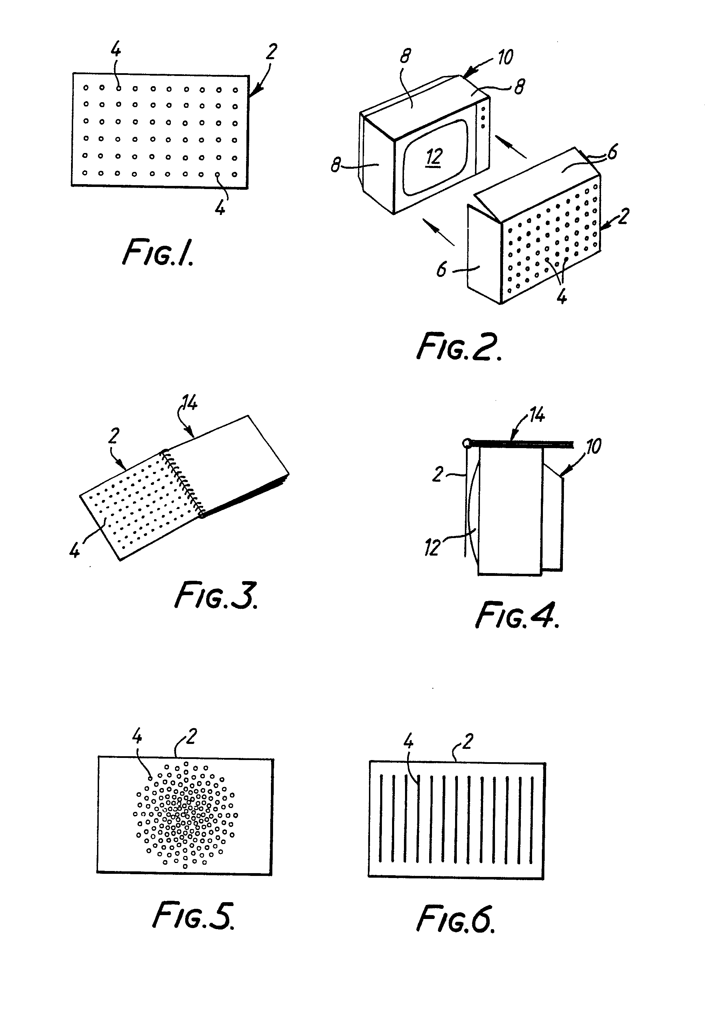

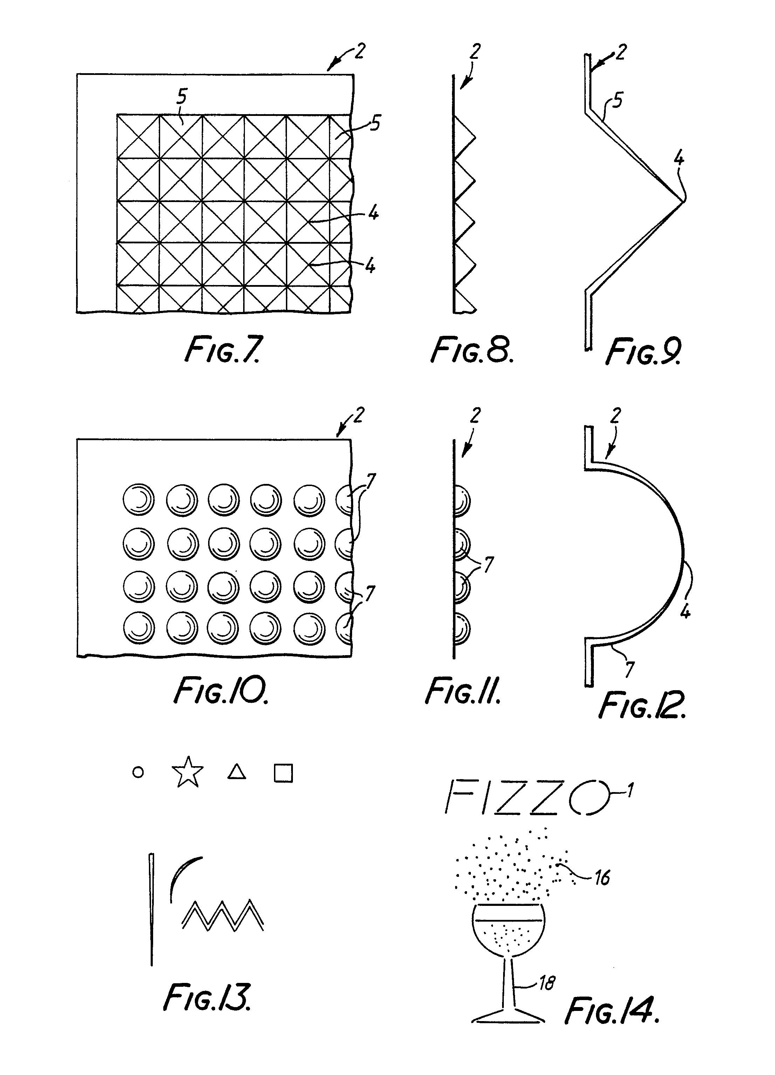

Referring to Figure 1, there is shown a panel 2 which is for fitting to a screen of a television. The panel 2 comprises a pattern of area in the form of apertures 4. The apertures 4 enable the screen to be visible.

Referring now to Figure 2, a panel 2 is shown having the apertures 4 and also having folded side portions 6. It will be seen that the side portions 6 fit around the sides 8 of a television 10 so that the panel 2 is retained on the television 10 with the panel being over a screen 12 of the television 10. When the panel 2 is in position on the screen 12 and the television 10 is on, then the apertures 4 enable a light display to be seen on the panel 2. The light display is usually seen as a changing light display due to a changing television picture on the television screen 12. The pattern of the apertures as shown in Figures 1 and 2 will usually be such as to give an abstract display which may be watched for its soothing qualities and may thus be of special use to persons suffering from nerves or insomnia.

The panel 2 shown in Figures 1 and 2 is advantageously made of card. In contrast, the panel 2 shown in Figures 3 and 4 is made of paper and forms one page of a book 14, As can be seen from Figure 4, the book 14 rests on top of the television 10 and thus forms fastener means mounting the panel 2 such that panel 2 is resting downwardly as illustrated over the screen 12 of the television. Static electricity on the television screen may advantageously be effective to hold the panel 2 in physical contact with the screen 12. The panel 2 is then released when the television is switched off and the static electricity disperses. It is of course not necessary that the panel 2 be in physical contact with the screen 12, and, with appropriately sized apertures, the panel 2 may be spaced from the screen 12 if desired.

Referring now to Figure 5, there is shown a panel 2 with a circular display of areas in the form of apertures 4. In Figure 6 there is shown a panel 2 with a plurality of areas in the form of slits 4.

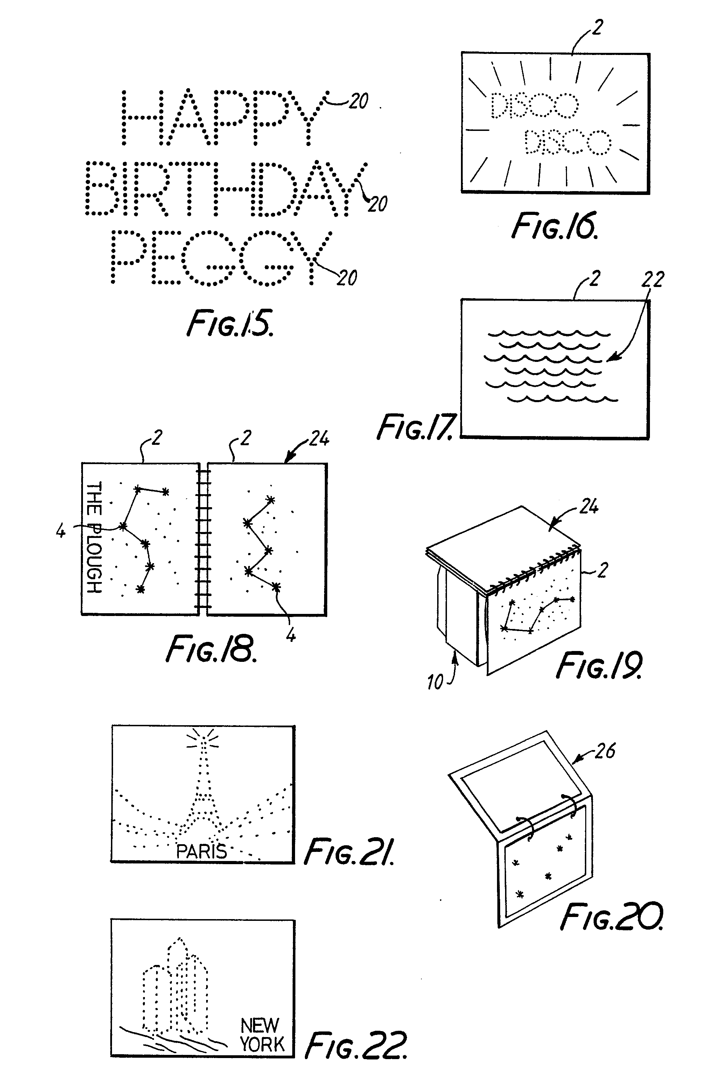

Figures 7,8 and 9 show a sixth panel 2 with a plurality of areas in the form of apexes 4 of thinned opaque plastics material. The panel 2 is vacuum formed to have a plurality of protuberances in the form of pyramids 5. Figure 9 is an enlarged part of the panel 2 and shows one of the pyramids 5 in cross section. It can be seen that the thickness of the plastics material gets thinner and thinner towards the apex 4 of the pyramid 5. At the apex 4, the plastics material is so thin that the television screen is able to be seen just through the apex 4 so that a light display is able to be obtained on the panel 2 when the panel 2 is placed in front of the screen of a television and the television is switched on. The panel 2 is placed such that the television is on the left hand side of the panel 2 as viewed in Figure 9 and a person watching the panel 2 is seated at a normal viewing distance on the right hand side of the panel 2 as viewed in Figure 9.

Referring now to Figures 10,11 and 12, there is shown a seventh panel 2 which is like the panel 2 shown in Figures 7,8 and 9 except that the panel 2 of Figures 10, 11 and 12 is such that the protuberances are formed as half circles or domes 7. Figure 12 is an enlarged cross sectional view through part of the panel 2 shown in Figures 10 and 11 and it illustrates how the dome 7 becomes thinner and thinner towards its apex 4. The dome 7 may give a larger area through which a television can be seen than the area available from the panel 2 shown in Figures 7, 8 and 9. This can be seen by comparing Figures 9 and 12 where it will be apparent that the dome 7 has a larger area of very thin material than the pyramid 5. The normal standard thickness of the panel 2 is shown at the base of the pyramid 5 and the dome 7 shown in Figures 9 and 12. The panel 2 shown in Figures 10,11 and 12 is advantageously vacuum formed, similarly as the panel 2 shown in Figures 7,8 and 9.

Figure 13 shows examples of various types of areas such as apertures that may be provided in the panel 2. Thus the areas may be, as illustrated, circular, star, triangular, square, elongate, crescent or wavy areas.

Referring now to Figure 14, there is shown a design which could be used for advertising and in the illustrated design there are first apertures 15 forming the word FIZZO, second apertures 16 simulating bubbles, and third apertures 18 forming a glass.

In Figure 15, it will be seen that dotted apertures 20 form the words HAPPY BIRTHDAY PEGGY. Generally, with reference to Figures 14 and 15, the areas such as the apertures may be used to form any desired advertising and promotional material. The panel 2 may be provided with the areas such as to make symbols, letters, words or any desired images, relating as may be desired to a product name or service. The panel 2 can then be used as an advertising device which also has the attraction of being a novelty for attracting attention to the product or the company name being promoted. As will be especially appreciated from Figure 15, the areas may be used to form greetings cards of any desired type. Dotted apertures on a panel 2 could be used to flash out any desired message such for example as that shown in Figure 15. Somewhat similarly to the production of cards, it will be apparant that posters could also be produced as the panels of the invention. The posters could be of popular TV personalities and pop stars.

Where the panel 2 might be required to be used as a gift product, then the panel 2 would be provided with, for example, an abstract pattern. The panel 2 could then be sold as a novelty gift item. Various abstract patterns can obviously be employed and the above mentioned Figures 5 and 6 show examples of patterns of areas that may be employed. A plurality of the panels 2 could be sold as a gift pack giving varying viewing displays.

Referring now to Figures 16 and 17 the illustrated panels 2 could be sold as part of the packaging for a record or other musical product. For example, the panel 2 shown in Figure 16 with the words DISCO could used to accompany disco records. Similarly, the wavy display 22 shown in Figure 17 could be used to accompany records of, for example, Handel's Water Music.

Figures 18 and 19 illustrate how the panels 2 may be used for educational and/or recreational activity. More specifically, it will be seen that the apertures 4 form a star constellation, that is The Plough. Various panels 2 can exhibit various constellations. They can then be provided on the television 10 as shown in Figure 19 and excitingly viewed. Printed information may be provided on the panel 2 to further explain the illustrated constellation. Actual apertures 2 may be made by a child, for example to facilitate learning by participating in the actual production of the desired display. Where the child is to make the perforations, then markings will usually be employed so that the child makes the perforations in the required position.

Figure 20 illustrates the same idea as in Figures 18 and 19 but instead of the panels 2 forming a book 24, the panels 2 form a clip file or folder 26. The use of the folder 26 may be preferred for ease of changing panels 2.

The panels 2 in the book 24 or the folder 26 may also be employed to give a display as shown in Figures 21 and 22. The display in Figure 21 is of the Eifel Tower whilst the display in Figure 22 is of skyscrapers as might be seen in New York. As an alternative to showing buildings, animals or other objects may be shown. In the case of animals, interesting effects may be obtained so that, for example a chameleon may be seen to change colour with a changing television picture.

It is to be appreciated that the embodiments of the invention described above reference to the accompanying drawings have been given by way of example only and that modifications may be effected. Thus, for example, instead of using fastener means in the form of the folded side portions 6 as shown in Figure 2 or the illustrated books, the fastener means could be suction pads or even sticky tape. The panels 2 may be provided in any desired size and shape although they will generally be of the size and shape to fit appropriate television screens. The apertures 4 will generally have the effect of breaking up the picture on the television screen 12 and converting it to individual points of light/colour. The movement of the pattern seen on the panel 2 is dictated by the changing action of the picture on the television screen 12 as well as the precise pattern of apertures in the panels 2. Varying effects can be obtained by adjusting the intensity of the light and colour of the television 10. Instead of forming apertures 4 in card or paper, the apertures 4 could also be formed in panels of opaque plastics materials. Transparent plastics materials could be employed, in which case such panels would be rendered opaque, for example by printing with only areas in the desired pattern being left transparent.

## Claims

1. A panel which is for fitting to a screen of a television and which comprises a pattern of areas through which the screen is visible, the panel being such that when it is in position on the screen and the television is on then the areas enable a light display to be seen on the panel.

2. A panel according to claim 1 in which the areas are apertures, and in which the panel is made of an opaque material.

3. A panel according to claim 1 which is made of an opaque plastics material, and in which the areas are areas of the opaque plastics material that are sufficiently thin so as to enable the light display to be seen on the panel.

4. A panel according to claim 1 which is made of a transparent material which is rendered opaque, and in which the transparent areas are the areas that have not been rendered opaque.

5. A panel according to any one of the preceding claims and including fastener means for fastening the panel to the screen of the television.

6. A panel according to claim 5 in which the fastener means comprises folded portions for fitting around the television.

7. A panel according to claim 5 in which the fastener means are suction pads.

8. A panel according to claim 5 in which the panel is a flat panel.

9. A panel according to claim 5 in which the panel is provided with protuberances, and in which the areas are provided in the protuberances.

10. The combination of a television and a panel which comprises a pattern of areas through which the screen is visible, the panel being such that when it is in position on the screen and the television is on then the areas enable a light display to be seen on the panel.

FIG.1.

FIG.2.

FIG.3.

FIG.4.

FIG.5.

FIG.6.

FIG.7.

FIG.8.

FIG.9.

FIG.10.

FIG.11.

FIG.12.

FIG.13.

FIG.14.

HAPPY
BIRTHDAY
PEGGY
*20*
*20*
*20*

FIG.15.

FIG.16.

*2*

FIG.17.

*2* *22*

THE PLOUGH

*2* *2* *24*

*4*

*4*

FIG.18.

*24*

*2*

*10*

FIG.19.

PARIS

FIG.21.

*26*

FIG.20.

NEW
YORK

FIG.22.